# EUROPEAN PATENT APPLICATION

(11) **EP 4 737 978 A1**
(43) Date of publication of application: **06.05.2026**
(21) Application number: 24209868.9
(22) Date of filing: 30.10.2024
(51) Int. Cl.: G02B 21/36, G06T 7/30, G06T 7/00, G01N 1/28

(54) **CONTROLLER FOR A LASER MICRODISSECTION SYSTEM, LASER MICRODISSECTION SYSTEM, AND METHOD FOR LASER MICRODISSECTION**

(71) Applicant: Leica Microsystems CMS GmbH, 35578 Wetzlar (DE)
(72) Inventor: Schlaudraff, Falk, 35578 Wetzlar (DE); Marr, James, 35578 Wetzlar (DE); Greb, Christoph, 35578 Wetzlar (DE); Hoffmann, Florian, 35578 Wetzlar (DE)
(74) Representative: Schaumburg und Partner Patentanwälte mbB

(57) **Abstract**

A controller (136) for a laser microdissection system (100) is configured to receive a first image (300) of a sample (102) comprising multiple image tiles (302) stitched together, and a first set of coordinates in a coordinate system of the first image (300). The first set of coordinates define at least one segment (304) to be removed from the sample (102). The controller (136) is also configured to control the laser microdissection system (100) to generate at least one second image (400) of a part of the sample (102), to generate at least one second set of coordinates in the coordinate system of the second image (400), each of the second sets of coordinates corresponding to at least a subset of the first set of coordinates, and to control the laser microdissection system (100) based on the at least one second set of coordinates to remove the at least one segment (304) from the sample (102). The controller (136) is further configured to determine at least two reference points on the sample (102) visible in the first image (300) and the at least one second image (400), to determine original coordinates corresponding to coordinates of the reference points in the coordinate system of the first image (300), to determine target coordinates corresponding to coordinates of the reference points in a coordinate system of the at least one second image (400), and to generate the at least one second set of coordinates based on the original coordinates and the target coordinates.

## Description

### Technical field

The invention relates to a controller for a laser microdissection system, and to a laser microdissection system. The invention further relates to a method for laser microdissection.

### Background

A laser microdissection system uses a laser beam to separate a small portion, called a dissectate, from a specimen. The specimen may be a thin tissue section, for example, that is cut in order to isolate specific cells or other microscopic regions of interest. These regions of interest may be determined in an overview image of the specimen, which has been captured by a slide scanner, for example. In particular, these regions of interest may be determined as a set of coordinates, which define the regions of interest in terms of coordinates in the overview image. In order to be able to use the set of coordinates with the laser microdissection system, the coordinates need to be transformed into a coordinate system used by the laser microdissection system, for example.

### Summary

It is an object to provide a controller for a laser microdissection system, a laser microdissection system, and a method for laser microdissection, which improve upon known systems and methods.

The aforementioned object is achieved by the subject-matter of the independent claims. Further embodiments are defined in the dependent claims and the following description.

The proposed controller for a laser microdissection system is configured to receive a first image of a sample comprising multiple image tiles stitched together, and a first set of coordinates in a coordinate system of the first image. The first set of coordinates define at least one segment to be removed from the sample. The controller is also configured to control the laser microdissection system to generate at least one second image of a part of the sample, to generate at least one second set of coordinates in the coordinate system of the second image, each of the second sets of coordinates corresponding to at least a subset of the first set of coordinates, and to control the laser microdissection system based on the at least one second set of coordinates to remove the at least one segment from the sample. The controller is further configured to determine at least two reference points on the sample visible in the first image and the at least one second image, to determine original coordinates corresponding to coordinates of the reference points in the coordinate system of the first image, to determine target coordinates corresponding to coordinates of the reference points in a coordinate system of the at least one second image, and to generate the at least one second set of coordinates based on the original coordinates and the target coordinates.

The first image may be an overview image of the sample captured by a slide scanner, a multiplex spatial imager, or a fluorescence microscope, for example. The sample may comprise a carrier, for example a membrane arranged in a frame, a microscope slide or a cell-culture dish, and one or more specimen arranged thereon. The actual specimen may only cover a part of the carrier, meaning that the first image may comprise one or more image tiles which do not comprise the specimen. These image tiles are essentially empty and featureless, making it difficult to stitch them together correctly, as pixel rows and pixel columns cannot be correlated exactly. For example, in a fluorescence image, image tiles which do not comprise a part of the actual specimen are black, making it very difficult to correctly align them for stitching. It has been recognized that this may pose a problem when transferring segments defined in a coordinate system of the overview image into a coordinate system used by the laser micro dissection system. For example, fixed reference points arranged at an edge of the carrier are used. There may be many empty image tiles between these fixed points and the actual specimen, which may cause a misalignment of the segments transferred into the coordinate system used by the laser micro dissection system due to incorrect stitching. Even a small misalignment in the order of 1 µm may cause the laser micro dissection system to miss a cell nucleus, for example, that is about 2 µm to 10 µm in size.

The proposed controller addresses the issue of a potential misalignment between the coordinate system of the first image, which may be the overview image captured by the slide scanner, and the coordinate system of the second image, which is captured by the laser microdissection system itself, by using dynamic reference points. The reference points may be structures of the actual specimen, for example, which are visible in both the first image and the second image. From the coordinates of reference points in the first image, i.e. the original coordinates, and the coordinates of reference points in the second image, i.e. the target coordinates, the controller determines a relationship between the coordinate system of the first image and the coordinate system of the second image. From this relationship the controller determines the at least second set of coordinates, i.e. the coordinates of the segments in the coordinate system of the second image. Based on the at least one second set of coordinates, the segments determined in the first image can be accurately removed using the laser microdissection system.

Using the proposed controller has further advantages. The controller makes it possible to faithfully transfer coordinates of segments from an external device to the laser microdissection system. This enables a user to use a device other than the laser microdissection system to determine the segments to be removed from the sample in advance, which is more time efficient than using the laser microdissection system itself to define the segments. The controller uses dynamic reference points, which may all be located within the actual specimen. Therefore, it is not necessary to capture the entirety of the carrier as the first image in order to capture fixed reference points arranged on the carrier, for example. This significantly reduces the number of image tiles which need to be captured to generate the first image. Since the memory requirement for each of the image tiles is approximately the same, regardless of whether the image tile contains useful information or not, the memory required for storing the first image can be significantly reduced too.

The controller may comprise at least one processor and at least one memory element. The controller may also comprise an interface to connect to a remote memory element in addition or as an alternative to the local memory element.

In an embodiment, the controller is configured to control the laser microdissection system to generate at least two second images, each second image comprising a different part of the sample, and to determine for each second image at least one of the reference points such that said reference point is visible in the first image and the respective second image. In such an embodiment, the controller controls the laser microdissection system to image multiple different parts of the sample and determines at least one reference point for each of the parts. In this way, the reference points may cover a large area of the actual specimen, making it possible to faithfully transfer the coordinates of the segments in this large area at once. In particular, having a grid of reference points which covers a large area of the actual specimen makes it possible to faithfully transfer the coordinates of all the segments at once. This significantly reduces the time required to transfer the coordinates of the segments to the laser microdissection system.

In another embodiment, the controller is configured to control the laser microdissection system to generate at least two second images, each second image comprising a different part of the sample, to determine for each of the second images at least two of the reference points such that said reference points are visible in the first image and the respective second image, and to generate one of the second sets of coordinates for each of the second images. In such an embodiment, at least two of the reference points may be determined for one of the second images before another of the second images is captured. Using the reference points determined for one of the second images, the controller then transfers the segments in the part of the sample visible in said second image, i.e. generate the second set of coordinates corresponding to the segments in the part of the sample visible in said second image. This process is then repeated for at least one further part of the sample. This allows the controller to transfer the coordinates of the segments to the laser microdissection system section by section, allowing the transfer of the coordinates to be performed in parallel with capturing the second images. Thereby, the time required to transfer the coordinates of the segments to the laser microdissection system can be further reduced.

In another embodiment, the controller is configured to control the laser microdissection system based on one of the second sets of coordinates to remove at least one of the segments from the sample before another of the second images is generated. This makes it possible to remove the segments from the sample section by section, removing the segments from one part of the sample before moving to the next part of the sample. This significantly speeds up the process of removing the segments from the sample.

In another embodiment, the controller is configured to determine the original coordinates based on the target coordinates, the first image, and the second image using an image matching method. In such an embodiment, the controller determines the original coordinates, i.e. the coordinates of the reference points in the coordinate system of the first image, by matching features of the actual specimen in the first and second images, for example. To match the features, the controller employs the image matching method. For example, the controller may use artificial intelligence like a machine learning algorithm, such as a Convolutional Neural Network or any other mathematical algorithm, for example Scale-Invariant Feature Transform (SIFT), image analysis or pattern recognition method or a combination of those, as part of the image matching method. Furthermore, instead of the visible image, image properties that describe the corresponding region of interest can be used for matching.

In another embodiment, the controller is configured to determine a section of the first image corresponding to at least one of the second images, and to determine the original coordinates based on the target coordinates and the section of the first image. In such an embodiment, the controller matches the coordinates of the reference points in the first image and the second image by overlaying the second image over the first image. This is a robust way of determining the original coordinates from the target coordinates. The controller may be configured to determine the section of the first image corresponding to at least one of the second images using the image matching method.

In another embodiment, the laser microdissection system is configured to generate the at least one second image using at least one imaging technique. The controller may further be configured to generate an artificial first image based on the first image, the artificial first image simulating visual characteristics of the at least one imaging technique, and to determine the original coordinates based on the target coordinates and the artificial first image. The artificial first image is a simulation of what the first image would look like, if the first image was generated using the at least one imaging technique employed by the laser microdissection system. For example, the laser microdissection system may be configured to employ transmitted light microscopy as the at least one imaging technique. The first image may be an image generated from a number of different fluorescence channels, a so-called multiplexed fluorescence image. The controller may be configured to generate the artificial first image from the first image, by simulating, for example, the pattern of a hematoxylin and eosin stain using known methods. Simulating what the first image would look like if the first image were generated using the at least one imaging technique employed by the laser microdissection system aids in the matching of the first and second images, thereby enabling a more robust determination of the original coordinates based on the target coordinates. A more robust determination of the original coordinates in turn enables a more faithful transfer of the segments to the laser microdissection system.

In another embodiment, the controller is configured to determine a coordinate transformation from the coordinate system of the first image to the coordinate system of the at least one second image, and to generate the at least one second set of coordinates based on the coordinate transformation. The coordinate transformation may be a linear transformation, for example, which is equivalent to a rotation, a reflection, and/or stretching or squeezing. Two reference points are sufficient for the controller to determine the coordinate transformation as a linear transformation. The controller may use three or more reference points to determine the coordinate transformation as a non-linear transformation, which may also take into account non-linear effects such as geometric distortions induced by an optical system, for example spherical aberration.

The invention also relates to a laser microdissection system, comprising at least one laser light source configured to generate a laser beam, an optical system configured to guide the laser beam onto the sample, and the controller described above.

The laser microdissection system has the same advantages as the controller described above. In particular, the laser microdissection system may be supplemented with the features described in this document in connection with the controller. Furthermore, the controller described above may be supplemented with the features described in this document in connection with the laser microdissection system.

In an embodiment, the laser microdissection system comprises a scanning unit configured to move the laser beam within a field of view of an objective lens of the optical system. In such an embodiment, it is possible to leave the sample stationary, and to move the laser beam over the sample with minimal effort using the scanning unit. This reduces the number of moving parts of the laser microdissection unit, and thus increases the precision with which the dissectates can be separated from the sample.

In another embodiment, the scanning unit comprises two prisms which are arranged rotatably around an optical axis between the laser light source and the objective lens. The optical axis here is the optical axis of the objective or extension thereof, for example via a beam splitter. Each of the prisms deflects the laser depending on the rotation of the prism. The beam deflection caused by each of the prisms add up vectorially. Thus, by rotating the two prisms, the laser beam can be moved inside the field of view of the objective lens. In particular, the rotation of the prisms also causes a change of the beam offset at the output of the scanning unit. This beam offset compensates for the lateral deflection of the laser beam, which is otherwise generated in the plane of the objective pupil. As a result, the laser beam always passes through the pupil of the objective lens regardless of the deflection angle.

In some embodiment, the scanning unit may also comprise at least one of a scanning mirror device and a spatial light modulator, such as a digital mirror device. The scanning mirror device and the spatial light modulator may each be configured to achieve at least a comparable functionality compared to the scanning unit comprising the two prisms.

In another embodiment, the laser microdissection system comprises a sample positioning unit configured to move the sample relative to an optical axis of an objective lens of the optical system. The sample positioning unit may comprise a movable microscope stage, for example an x-y stage. The sample positioning unit makes it possible to position the sample within the field of view of the objective lens. If the laser beam is kept stationary, the sample may be moved using the sample positioning unit in order to cut the dissectate in a table saw like manner.

In another embodiment, the laser light source comprises at least one pulsed laser. The pulsed laser generates pulsed laser light comprising a series of laser light pulses interrupted by intervals in which no laser light is emitted. The duration of the intervals in which no laser light is emitted may be adjustable. A laser beam formed from such pulsed laser light may be used to cut the sample in a way that is non-damaging to the remaining sample. Further, the at least one pulsed laser may be controlled to generate short laser pulses. Such short laser pulses may be formed into a laser beam that is defocused with respect to the sample. Such a laser beam may be used to tear the dissectate from the sample using the radiation pressure exerted by the laser beam on the sample.

In another embodiment, the laser light source comprises at least one UV-laser-light source. The UV-laser-light source is configured to generate UV-laser-light from which the laser beam is formed. UV-laser-light has a short wavelength, which enables high precision cuts and reduces the likelihood of heat diffusion, thereby minimizing damage to areas adjacent to the dissectate.

The invention further relates to a method for laser microdissection. The method comprises at least the following steps: a) receiving a first image of a sample comprising multiple image tiles stitched together, and a first set of coordinates in a coordinate system of the first image, the first set of coordinates defining at least one segment to be removed from the sample. b) Generating at least one second image of a part of the sample using a laser microdissection system. c) Generating at least one second set of coordinates in the coordinate system of the second image, the at least one second set of coordinates corresponding to at least a subset of the first set of coordinates, d) Controlling the laser microdissection system based on the at least one second set of coordinates to remove the at least one segment from the sample. The method further comprises determining at least two reference points on the sample visible in the first image and the at least one second image, determining original coordinates corresponding to coordinates of the reference points in the coordinate system of the first image, determining target coordinates corresponding to coordinates of the reference points in a coordinate system of the at least one second image, and generating the at least one second set of coordinates based on the original coordinates and the target coordinates.

The method has the same advantages as the controller and the laser microdissection system described above. In particular, the method may be supplemented with the features described in this document in connection with the controller and/or the laser microdissection system. Furthermore, the controller and the laser microdissection system described above may each be supplemented with the features described in this document in connection with the method.

In an embodiment the method further comprises generating at least two second images using a laser microdissection system, each second image comprising a different part of the sample. The method may further comprise determining for each of the second images at least one of the reference points such that said reference point is visible in the first image and the respective second image. In such an embodiment, multiple different parts of the sample are imaged. At least one reference point is determined for each of the parts. Thereby, a grid of reference points is generated, that may cover a large area of the actual specimen. This enables a faithful transfer of the coordinates of the segments in this large area, significantly reducing the time required to transfer the coordinates of the segments to the laser microdissection system. In particular, it is possible to faithfully transfer the coordinates of all the segments at once in such an embodiment of the method.

In another embodiment, steps b) to d) are repeated for different parts of the sample. In such an embodiment, for each of the different parts of the sample, a second image is generated, and at least two reference points are determined in said second image. Based on the at least two reference points the segments in the current part of the sample are transferred, and the segments are removed from the sample. The steps b) to d) may be repeated until all segments defined by the first set of coordinates have been removed from the sample.

In another embodiment, the sample comprises a tissue microarray section. A tissue microarray comprises multiple tissue samples embedded in another material, typically paraffin. A tissue microarray section is a thin section cut from a tissue microarray, which comprises multiple tissue sections. Since the tissue microarray section comprises multiple tissue sections separated by essentially featureless sections of the embedding material, there is a risk of a misalignment of segments transferred to the laser microdissection system. The proposed method may thus be advantageously used with a sample comprising a tissue microarray section, preventing a misalignment of the segments.

### Short Description of the Figures

Hereinafter, embodiments are described referring to the drawings, wherein:
- Figure 1: is a schematic view of a laser microdissection system according to an embodiment;
- Figure 2: is a flowchart of the method for laser microdissection according to an embodiment;
- Figure 3: is a schematic view of an exemplary first image; and
- Figure 4: is a schematic view of an exemplary second image.

### Detailed Description of the Figures

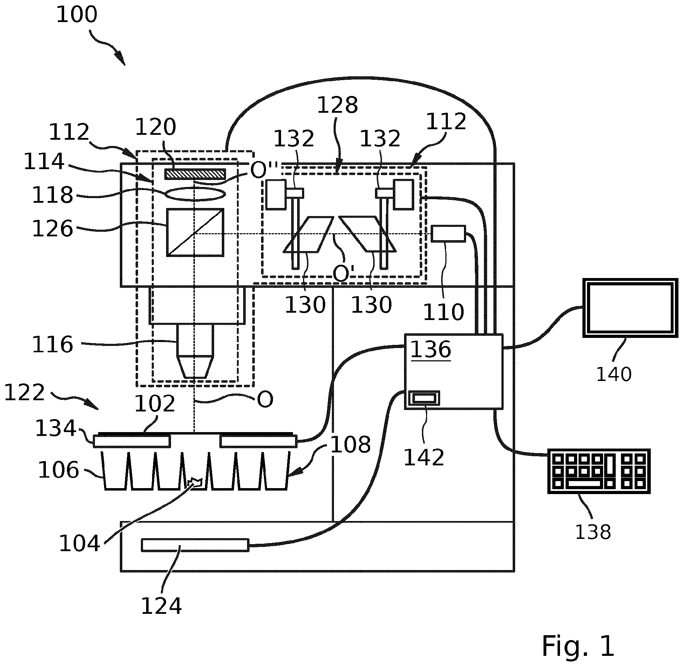

Figure 1 is a schematic view of a laser microdissection system 100 according to an embodiment. The laser microdissection system 100 is configured to remove small portions of a sample 102 using a laser beam. The removed portions will be called dissectates 104 in the following. The sample 102 may comprise a specimen, for example a biological specimen, such as a tissue section, arranged on a carrier, for example a membrane on a frame. For example, specific cells, cell clusters or other microscopic features of the sample 102 may be separated from the sample 102 and collected as the dissectates 104. Regions of interest corresponding to the portions of the sample 102 to be removed will also be called segments in the following.

In the embodiment shown in Figure 1, the dissectates 104 are collected in wells 106 of a collection arrangement 108 arranged below the sample 102. The collection arrangement 108 is exemplary shown as a multiwell plate. The wells 106 of the collection arrangement 108 may also be formed by PCR-tubes that may be arranged in a frame to facilitate easy handling, by one or more Petri-dishes, or by similarly suited vessels. The collection arrangement 108 and/or individual wells 106 may be removable, allowing the dissectates 104 to be further processed.

The laser microdissection system 100 comprises a laser light source 110 configured to generate a laser beam. Using the laser beam the laser microdissection system 100 separates the dissectates 104 from the sample 102. For example, the laser microdissection system 100 may cut the dissectates 104 from the sample 102 using a focused beam or tear the dissectates 104 from the sample 102 using a defocused beam. The laser light source 110 may comprise one or more pulsed lasers for generating pulsed laser light from which the laser beam is formed.

The laser microdissection system 100 also comprises an optical system 112 configured to guide the laser beam along a beam path O, O'. In the embodiment shown in Figure 1, the optical system 112 comprises an optical detection system 114 for capturing images of the sample 102. The optical detection system 114 comprises an objective lens 116, a tube lens 118, and a detector 120. Further optical elements, such as lenses, filters, and apertures, may be part of the optical detection system 114. The objective lens 116 is directed at a sample space 122 in which the sample 102 is arranged. In the present embodiment, the objective lens 116 focusses the laser beam into the sample space 122, for example on the sample 102. The objective lens 116 is further configured to receive detection light from the sample 102. The detection light is directed by the objective lens 116 towards the detector 120 via the tube lens 118. The detector 120 is configured to generate the images of the sample 102 from the detection light.

In the embodiment shown in Figure 1, the laser microdissection system 100 also comprises an illumination system 124 configured to illuminate the sample 102. The illumination system 124 is exemplary arranged below the sample 102. The illumination system 124 may also be arranged above the sample 102 and be configured for incident light illumination. The optical system 112 may further be configured to illuminate the sample 102 via the objective lens 116.

In the present embodiment, a beam splitter 126 is arranged between the objective lens 116 and the tube lens 118. The beam splitter 126 is configured to direct the detection light towards the detector 120 via the tube lens 118. The beam splitter 126 may be a dichroic beam splitter 126, for example. The beam splitter 126 splits the beam path O originating at the sample 102 into two branches O', O", one branch O' extending to the laser light source 110 and another branch O" extending towards the detector 120. In the present embodiment, the laser beam is directed into the objective lens 116 via the beam splitter 126. Thereby, the beam splitter 126 allows the objective lens 116 to be used for both imaging and separating the dissectates 104.

In order to move the laser beam in the sample space 122, the laser microdissection system 100 according to the present embodiment comprises a scanning unit 128. The scanning unit 128 is exemplary arranged as part of the optical system 112 between the laser light source 110 and the objective lens 116. The scanning unit 128 exemplary comprises two prisms 130 arranged in the beam path between the laser light source 110 and the beam splitter 126. The two prisms 130 are arranged rotatable around the optical axis O' of said beam path and configured to deflect the laser beam depending on their rotation. Thus, by rotating the two prisms 130, the laser beam can be moved relative to the sample 102 inside the field of view of the objective lens 116. The scanning unit 128 further comprises a drive unit 132 for each of the two prisms 130. The two drive units 132 are configured to rotate the prisms 130 independently of each other.

In the present embodiment, the laser microdissection system 100 also comprises a sample positioning unit 134 arranged in the sample space 122. The sample 102 is arranged on the sample positioning unit 134. In the embodiment shown in Figure 1, the sample positioning unit 134 is exemplary formed as a microscope stage having an opening, which allows the dissectates 104 to fall into the wells 106 of the collection arrangement 108 under the influence of gravity. The sample positioning unit 134 is configured to move the sample 102 relative to the optical axis O of the objective lens 116. In particular, the sample positioning unit 134 is configured to move the sample 102 in a plane perpendicular to the optical axis O of the objective lens 116, i.e. in the x- and y-directions, and may also be configured to move the sample 102 in the direction of the optical axis O, i.e. in the z-direction. By means of the sample positioning unit 134, the sample 102 can be automatically and precisely positioned in a field of view of the objective lens 116. Thereby, a specific area of the sample 102 from which one or more dissectates 104 are to be removed can be brought into the field of view.

The laser microdissection system 100 further comprises a controller 136, an input unit 138, and an output unit 140. The controller 136 is configured to receive a user input via the input unit 138, and to display visual information to a user via the output unit 140. The input unit 138 is exemplary shown to comprise a keyboard. However, the input unit 138 may also comprise a computer mouse, a stylus for use with a touch screen, or other suitable input devices. The output unit 140 is exemplary shown as a monitor. The input unit 138 and the output unit 140 may also be a single element, for example a touch screen. The controller 136 further comprises an external interface 142 and is configured to receive data via the external interface 142. The external interface 142 may comprise a connector for a storage device, for example a flash drive, and/or a connection to a computer network, such as a local area network or the internet.

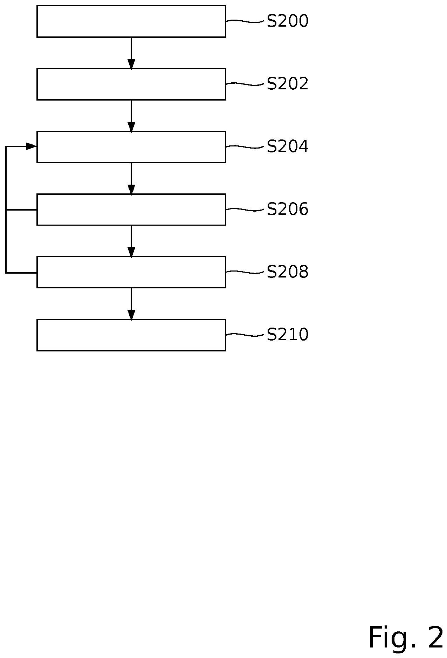

Further, the controller 136 is configured to perform at least some steps of a method for laser microdissection. In order to perform the method, the controller 136 may be configured to control at least one of the following elements: the laser light source 110, the optical system 112, the illumination system 124, the scanning unit 128, and the sample positioning unit 134. The method will be described in more detail below with reference to Figures 2, 3, and 4.

Figure 2 is a flowchart of the method for laser microdissection according to an embodiment. In the following, the method is described with reference to the laser microdissection system 100 according to Figure 1 as an example only. The method may be performed, at least in part, by the controller 136 of the laser microdissection system 100 according to Figure 1, for example.

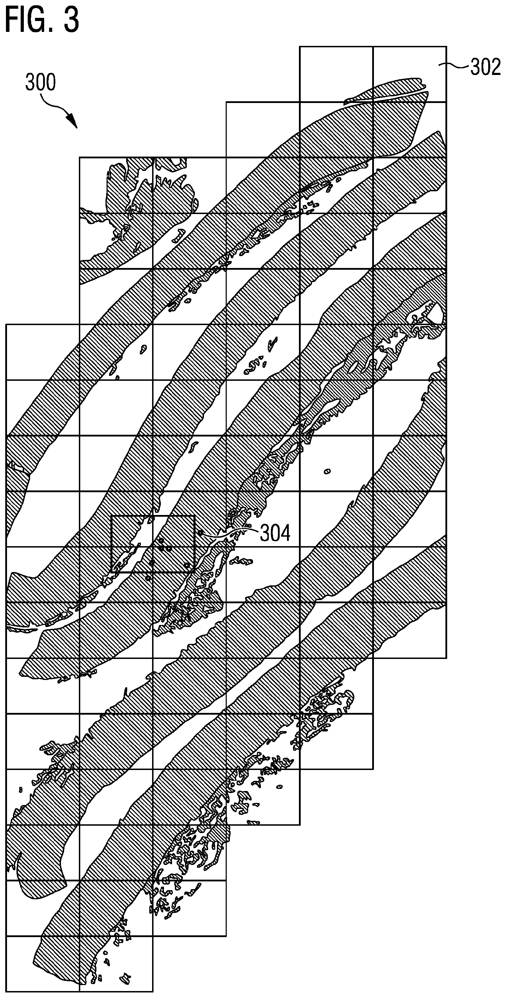

Before the method is started, the sample 102 may be prepared by arranging at least one specimen, for example a tissue section or a tissue microarray section, on a carrier, for example a membrane on a frame or a microscope slide. Further, before the method is started, a first image of the sample 102 is generated, which comprises multiple image tiles stitched together. For example, the first image may be captured using a slide scanner or a fluorescence microscope in multiple imaging steps. In some embodiments, the first image may be a multiplexed fluorescence image, generated from multiple different fluorescence channels. An exemplary first image 300 is shown in Figure 3. In the first image, segments are defined before the method is started. The segments correspond to small portions of the sample 102 which are to be removed from the sample 102. For example, the segments may correspond to specific cells, cell clusters or other microscopic features of the specimen. The segments are defined by a first set of coordinates in a coordinate system of the first image. In some embodiments, the segments may be defined manually by the user. In other embodiments, the segments may be defined automatically using known methods, for example using machine learning methods.

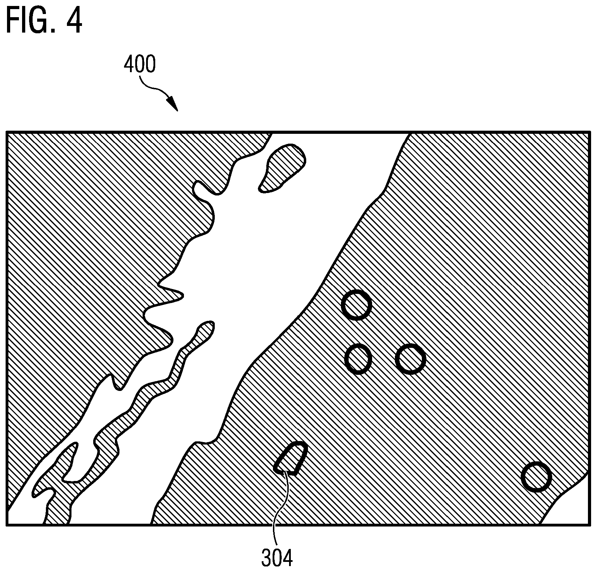

In step S200 the method is started. In step S202, the first image is received together with the first set of coordinates. For example, the first image and the first set of coordinates may be received by the controller 136 of the laser microdissection system 100 via the external interface 142. In step S204, at least one second image of a part of the sample 102 is generated using the laser microdissection system 100. For example, the controller 136 controls the laser microdissection system 100 to capture the at least one second image. The second image is generated using at least one imaging technique, for example transmitted light microscopy, reflected light microscopy or fluorescence microscopy. An exemplary second image 400 is shown in Figure 4.

In step S206, at least one second set of coordinates in the coordinate system of the second image is generated. The at least one second set of coordinates corresponds to at least a subset of the first set of coordinates, and thus to at least a subset of the segments defined before the method has been started. In some embodiments, the at least one second set of coordinates corresponds to the segments that are located in the part of the sample 102 visible in the second image. In other words, in step S206 at least a subset of the segments defined in the first image are transferred to the laser microdissection system 100. The at least one second set of coordinates may be generated by the controller 136, for example.

In order to determine the at least one second set of coordinates, at least two reference points on the sample 102 are determined, which are visible in the first image and the at least one second image. In some embodiments, the reference points may be features of the sample 102, which are visible in both the first image and the second image. For example, certain biological structures of the specimen may be used as the reference points. Cell nuclei, especially stained cell nuclei, for example using DAPI, membranes, organelles, especially stained organelles, other cell structures, or an extracellular matrix may all be used as one of the reference points. Further, artificial structures, such as fiducials or a structure on the membrane on which the actual specimen is arranged, may be used as one of the reference points. The reference points may be manually selected by the user in the at least one second image. For example, the user may view the at least one second image on the output unit 140 and input the reference points by user input via the input unit 138. The reference points may also be automatically determined, for example by the controller 136. In some embodiments, at least one of the reference points may be automatically determined as a point on the sample 102 located in the center, a corner, or a predetermined coordinate of the at least one second image.

Then, original coordinates, which correspond to coordinates of the reference points in the coordinate system of the first image, and target coordinates, which correspond to coordinates of the reference points in a coordinate system of the at least one second image, are determined. In order to determine the original coordinates based on the target coordinates, first a section of the first image may be determined that corresponds to the at least one second image. To determine said section, known image matching methods may be used. To facilitate the determination of the section, a virtual first image may be generated, for example by the controller 136, by simulating what the first image would look like, if the first image was generated using the at least one imaging technique employed by the laser microdissection system 100.

Finally, the at least one second set of coordinates is generated based on the original coordinates and the target coordinates. In some embodiments, a coordinate transformation may be determined, for example by the controller 136, that relates the coordinate system of the first image to the coordinate system of the second image. Said coordinate transformation may be used to translate the first set of coordinates or a subset thereof into the at least one second set of coordinates.

In step S208, the laser microdissection system 100 is controlled based on the at least one second set of coordinates to remove the at least one segment from the sample 102. For example, the controller 136 may perform step S208. In some embodiments, in step S208, the segments that are located in the part of the sample 102 visible in the second image are removed. The method is then ended in step S210.

In some embodiments of the method, at least the steps S204 and S206 are repeated for different parts of the sample 102. In such an embodiment, the sample 102 is imaged section by section. A subset of the segments is transferred, which comprises the segments located in the part of the sample 102 visible in the current second image, before the next second image is generated. Step S208 may be repeated as well, meaning that the segments located in the part of the sample 102 visible in the current second image are removed from the sample 102, before the next second image is generated. In other embodiments, multiple second images may be generated before the at least one second set of coordinates in the coordinate system of the second image is generated, i.e. before at least a subset of the segments is transferred.

Figure 3 is a schematic view of an exemplary first image 300. The first image 300 is stitched together from the multiple image tiles 302, each image tile 302 corresponding to an image of a different part of the sample 102. The sample 102 exemplary comprises multiple tissue sections as the specimen. As can be seen in Figure 3, the first image 300 comprises no empty image tiles 302, i.e. image tiles 302 which do not comprise at least part of the actual specimen. This reduces the computing power required for stitching as well as the amount of memory needed for storing the first image 300. A rectangle in Figure 3 indicates the section of the first image 300 corresponding to the second image shown in Figure 4. Figure 3 further shows a number of exemplary segments 304, which are defined in a coordinate system of the first image 300. Some of the segments 304 are within the section of the first image 300 corresponding to the exemplary second image 400 shown in Figure 4.

Figure 4 is a schematic view of an exemplary second image 400. The second image 400 shown in Figure 4 was generated using the optical detection system 114 of the laser microdissection system 100. The view of the second image 400 comprises a section of the sample 102 corresponding to four of the image tiles 302 that make up the first image 300 shown in Figure 3. Figure 4 further shows a subset of the segments 304, which has been transferred into a coordinate system of the second image 400, and thus is usable by the laser microdissection system 100, using the method described above. Based on the transferred segments 304, dissectates 104 may be removed from the sample 102 using the laser microdissection system 100.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step.

Analogously, aspects described in the context of a method step also represent a description of a corresponding block or item or feature of a corresponding apparatus.

### Reference signs

- 100: Laser microdissection system
- 102: Sample
- 104: Dissectate
- 106: Well
- 108: Collection arrangement
- 110: Laser light source
- 112: Optical system
- 114: Optical detection system
- 116: Objective lens
- 118: Tube lens
- 120: Detector
- 122: Sample space
- 124: Illumination system
- 126: Beam splitter
- 128: Scanning unit
- 130: Prism
- 132: Drive unit
- 134: Sample positioning unit
- 136: Controller
- 138: Input unit
- 140: Output unit
- 142: External interface
- 300: Image
- 302: Image tile
- 304: Segment
- 400: Image

## Claims

1. A controller (136) for a laser microdissection system (100), wherein the controller (136) is configured to
receive a first image (300) of a sample (102) comprising multiple image tiles (302) stitched together, and a first set of coordinates in a coordinate system of the first image (300), the first set of coordinates defining at least one segment (304) to be removed from the sample (102);
to control the laser microdissection system (100) to generate at least one second image (400) of a part of the sample (102);
to generate at least one second set of coordinates in the coordinate system of the second image (400), each of the second sets of coordinates corresponding to at least a subset of the first set of coordinates; and
to control the laser microdissection system (100) based on the at least one second set of coordinates to remove the at least one segment (304) from the sample (102);
wherein the controller (136) is configured to determine at least two reference points on the sample (102) visible in the first image (300) and the at least one second image (400),
to determine original coordinates corresponding to coordinates of the reference points in the coordinate system of the first image (300),
to determine target coordinates corresponding to coordinates of the reference points in a coordinate system of the at least one second image (400), and
to generate the at least one second set of coordinates based on the original coordinates and the target coordinates.

2. The controller (136) according to claim 1, wherein the controller (136) is configured to control the laser microdissection system (100) to generate at least two second images (400), each second image (400) comprising a different part of the sample (102), and
to determine for each second image (400) at least one of the reference points such that said reference point is visible in the first image (300) and the respective second image (400).

3. The controller (136) according to claim 1 or 2, wherein the controller (136) is configured to control the laser microdissection system (100) to generate at least two second images (400), each second image (400) comprising a different part of the sample (102),
to determine for each of the second images (400) at least two of the reference points such that said reference points are visible in the first image (300) and the respective second image (400), and
to generate one of the second sets of coordinates for each of the second images (400).

4. The controller (136) according to claim 3, wherein the controller (136) is configured to control the laser microdissection system (100) based on one of the second sets of coordinates to remove at least one of the segments (304) from the sample (102) before another of the second images (400) is generated.

5. The controller (136) according to any of the preceding claims, wherein the controller (136) is configured to determine the original coordinates based on the target coordinates, the first image (300), and the second image (400) using an image matching method.

6. The controller (136) according to any of the preceding claims, wherein the controller (136) is configured to determine a section of the first image (300) corresponding to at least one of the second images (400), and
to determine the original coordinates based on the target coordinates and the section of the first image (300).

7. The controller (136) according to any of the preceding claims, wherein the laser microdissection system (100) is configured to generate the at least one second image (400) using at least one imaging technique; and
wherein the controller (136) is configured to generate an artificial first image (300) based on the first image (300), the artificial first image (300) simulating visual characteristics of the at least one imaging technique, and
to determine the original coordinates based on the target coordinates and the artificial first image (300).

8. The controller (136) according to any of the preceding claims, wherein the controller (136) is configured to determine a coordinate transformation from the coordinate system of the first image (300) to the coordinate system of the at least one second image (400), and to generate the at least one second set of coordinates based on the coordinate transformation.

9. A laser microdissection system (100), comprising at least one laser light source (110) configured to generate a laser beam, an optical system (112) configured to guide the laser beam onto the sample (102), and the controller (136) according to any one of the preceding claims.

10. The laser microdissection system (100) according to claim 9, comprising a scanning unit (128) configured to move the laser beam within a field of view of an objective lens (116) of the optical system (112).

11. The laser microdissection system (100) according to claim 9 or 10, comprising a sample positioning unit (134) configured to move the sample (102) relative to an optical axis (O) of an objective lens (116) of the optical system (112).

12. A method for laser microdissection, comprising:
a) receiving a first image (300) of a sample (102) comprising multiple image tiles (302) stitched together, and a first set of coordinates in a coordinate system of the first image (300), the first set of coordinates defining at least one segment (304) to be removed from the sample (102);
b) generating at least one second image (400) of a part of the sample (102) using a laser microdissection system (100);
c) generating at least one second set of coordinates in the coordinate system of the second image (400), the at least one second set of coordinates corresponding to at least a subset of the first set of coordinates; and
d) controlling the laser microdissection system (100) based on the at least one second set of coordinates to remove the at least one segment (304) from the sample (102);
wherein the method further comprises determining at least two reference points on the sample (102) visible in the first image (300) and the at least one second image (400),
determining original coordinates corresponding to coordinates of the reference points in the coordinate system of the first image (300),
determining target coordinates corresponding to coordinates of the reference points in a coordinate system of the at least one second image (400), and
generating the at least one second set of coordinates based on the original coordinates and the target coordinates.

13. The method according to claim 12, wherein the method further comprises
generating at least two second images (400) using a laser microdissection system (100), each second image (400) comprising a different part of the sample (102); and
determining for each of the second images (400) at least one of the reference points such that said reference point is visible in the first image (300) and the respective second image (400).

14. The method according to claim 12, wherein steps b) to d) are repeated for different parts of the sample (102).

15. The method according to any one of the claims 12 to 14, wherein the sample (102) comprises a tissue microarray section.
